# EUROPEAN PATENT APPLICATION

(11) **EP 3 276 166 A1**
(43) Date of publication of application: **31.01.2018**
(21) Application number: 17183383.3
(22) Date of filing: 26.07.2017
(51) Int. Cl.: F03D 7/02, F03D 7/04

(54) **WIND POWER GENERATING SYSTEM**

(30) Priority: 29.07.2016 JP 2016149183
(71) Applicant: Hitachi, Ltd., Tokyo 100-8280 (JP)
(72) Inventor: KAKUYA, Hiromu, Tokyo, 100-8280 (JP); YAMAMOTO, Yukio, Tokyo, 100-8280 (JP)
(74) Representative: MERH-IP Matias Erny Reichl Hoffmann Patentanwälte PartG mbB

(57) **Abstract**

There is provided a wind power generating system 1 including: a rotor 4 that is provided with a blade 2 of which a pitch angle is changeable and that rotates by receiving the wind; a generator 6 that generates power by using rotation energy of the rotor 4; and a control device that controls a device that is included in the wind power generating system 1. In a case where a speed is equal to or higher than a wind speed at which a rotation speed of the generator 6 reaches a rated speed and a speed is equal to or lower than a wind speed to reach rated generation power, the control device performs feedforward control of generator torque that is transmitted as a command to the generator 6 and adjusts a change in input energy, based on a wind speed applied to the wind power generating system 1.

## Description

### BACKGROUND OF THE INVENTION

### FIELD OF THE INVENTION

The present invention relates to a wind power generating system, particularly, to a wind power generating system that suitably reduce vibration in a frontward-rearward direction that is generated in a floating body.

### BACKGROUND ART

In recent years, there has been a concern of global warming due to an increase in carbon dioxide emissions or energy shortage with depletion of fossil fuel, and thus there has been a demand for a decrease in carbon dioxide emissions or improvement of energy self-sufficiency rate. In order to realize the demand, it is effective to introduce a power generating system that is capable of generating power from renewable energy obtained from nature such as the wind power or the sunlight without emission of the carbon dioxide and without using the fossil fuel obtained by depending on the import thereof.

Among power generating systems using renewable energy, the windpower generating system without sharp output variations due to insolation as in a solar power system has attracted attention as a power generating system that is capable of maintaining a relatively stable power generation output. In addition, a wind power generating system constructed on the ocean with a high wind speed and small variations in wind speed, compared to those constructed on the ground, has also attracted attention as a promising power generating system. Since the windpower generating systemhas an energy conversion efficiency of a rotor, which changes depending on the wind speed, a variable speed operation performed in a variable operation range of rotor rotation speed.

The variable speed control is effective means for adjusting generation power by the wind power generating system; however, in a case where the wind power generating system is constructed on a foundation (hereinafter, a floating body) that floats on the ocean, excitation of natural vibration occurs at an angle (a nacelle pitch angle in a case of the floating body) in a frontward-rearward direction of the floating body, that is, resonance occurs, in some cases. In general, this vibration is referred to as a negative damping phenomenon. Control of a blade pitch angle through the variable speed control causes the negative damping phenomenon. This is because the control of the blade pitch angle so as to maintain the rotor rotation speed (or a generator rotation speed) to a rated value causes a thrust force as a force applied to a rotor in the frontward-rearward direction from the wind to increase or decrease such that the excitation of the natural vibration at the nacelle pitch angle occurs. When no action is taken, vibration amplitude of the nacelle pitch angle increases so as to result in an increase in a load of a tower or another structure and accumulation of fatigue.

Japanese Patent No. 4599350 discloses a "wind power generator, an active vibration damping method thereof, and a wind turbine tower" as means for reducing an occurrence of the negative damping phenomenon. In short, there is provided means for "calculating a pitch angle of a wind turbine blade in order to generate a thrust force to the wind turbine blade as a counteracting force to the vibration of the nacelle, based on acceleration detected by an accelerometer that is attached to a nacelle and detects the acceleration of the vibration of the nacelle.

In the wind power generating system, a wind speed at which a rotation speed of a generator or a rotor starts to be maintained as a rated rotation speed is different from a wind speed at which generation power starts to be maintained as rated power, and the wind speed at which the rotation speed of the generator or the rotor starts to be maintained as the rated speed is lower than the wind speed at which the generation power starts to be maintained as the rated generation power. In a case where only generator rotation speed control is performed, a pitch angle of the blade starts to be in the transition to a feather side before reaching original rated generation power. Therefore, power control is also performed together, and the pitch angle of the blade is continuously fixed to a fine side such that input energy from the wind is secured to the maximum extent until reaching the rated generation power.

Here, regarding a relationship between the generator rotation speed control and the power control, since both of the generator rotation speed and the generation power are likely to be high at a wind speed equal to or lower than the wind speed at which the generator starts to be maintained at the rated rotation speed, pitch angles in the same direction (fine side) as each other are tried to be obtained as target angles. In addition, since both of the generator rotation side and the generation power are likely to maintain values at a wind speed equal to and higher than the wind speed at which the rated generation power starts to be maintained, pitch angles in the same direction as each other are also tried to be obtained as target angles. On the other hand, in a wind speed region between the wind speed at which the rated rotation speed starts to be maintained and the wind speed at which the rated generation power starts to be maintained, it is necessary to increase the generation power while the generator rotation speed is maintained, and thus pitch angles in substantially different direction are tried to be obtained as target angles for both sides.

Through control of the pitch angles of the wind turbine blade as disclosed in Japanese Patent No. 4599350, vibration reduction of the nacelle is performed regardless of the wind speed; however, in the speed region between the wind speed at which the rated rotation speed starts to be maintained as described above and the wind speed at which the rated generation power starts to be maintained, inventors found as knowledge that flexibility of control performed by using the pitch angle of the same blade is reduced, compared to another wind speed region, and thus there is room for improvement in the vibration reduction. An object of the invention is to provide a wind power generating system or an operation method of the wind power generating system that is capable of achieving vibration reduction in a region from a wind speed equal to or lower than a wind speed to reach rated generation power to a wind speed equal to or higher than a wind speed at which a generator rotation speed reaches a rated speed.

### SUMMARY OF THE INVENTION

In order to solve such a problem, according to the invention, there is provided a wind power generating system including: a rotor that is provided with a blade of which a pitch angle is changeable and that rotates by receiving the wind; a generator that generates power by using rotation energy of the rotor; and/or a control device that controls a device that is included in the wind power generating system. In a case where a speed is equal to or higher than a wind speed at which a rotation speed of the generator reaches a rated speed and a speed is equal to or lower than a wind speed to reach rated generation power, the control device performs feedforward control of generator torque that is transmitted as a command to the generator and adjusts a change in input energy, based on a wind speed applied to the wind power generating system.

In addition, according to the invention, there is provided an operation method of a wind power generating system that includes a rotor that is provided with a blade of which a pitch angle is changeable and that rotates by receiving the wind, and a generator that generates power by using rotation energy of the rotor, the operation method comprising: performing feedforward control on generator torque that is transmitted as a command to the generator and adjusting a change in input energy, based on a wind speed applied to the wind power generating system, in a case where a speed is equal to or higher than a wind speed at which a rotation speed of the generator reaches a rated speed and is equal to or lower than a speed to reach rated generation power.

According to the invention, it is possible to provide the wind power generating system or the operation method of the wind power generating system that is capable of achieving vibration reduction in the region from the wind speed equal to or lower than the wind speed to reach rated generation power to the wind speed equal to or higher than the wind speed at which the generator rotation speed reaches a rated speed.

### BRIEF DESCRIPTION OF THE DRAWINGS

Fig. 1 is a diagram illustrating an outline of a configuration of a wind power generating system in a case where the invention is not embodied.
Fig. 2 is a block diagram illustrating an outline of a process of an operation control unit that is installed in a controller of the wind power generating system in the case where the invention is not embodied.
Fig. 3 is a block diagram illustrating an outline of a process of another operation control unit that is installed in an operation control unit in the case where the invention is not embodied.
Fig. 4 is a block diagram illustrating an outline of a process of still another operation control unit that is installed in an operation control unit in the case where the invention is not embodied.
Fig. 5 is a diagram schematically illustrating a relationship between a wind speed and generation power, a generator rotation speed, and a blade pitch angle of the wind power generating system in the case where the invention is not embodied.
Fig. 6 is a time chart schematically illustrating a change in a wind speed, generation power, a generator rotation speed, generator torque, generation power, a blade pitch angle, and a nacelle pitch angle in predetermined wind speed conditions of the wind power generating system in the case where the invention is not embodied.
Fig. 7 is a block diagram illustrating an outline of a process of an operation control unit that is installed in the controller according to a first embodiment of the invention.
Fig. 8 is a block diagram illustrating an outline of a process of another operation control unit that is installed in the controller according to the first embodiment of the invention.
Fig. 9 is a diagram illustrating an outline a process of still another operation control unit that is installed in the controller according to the first embodiment of the invention.
Fig. 10 is a diagram schematically illustrating a relationship between a wind speed and generation power, a generator rotation speed, and a generator torque command value in the wind power generating system in the case where the invention is not embodied.
Fig. 11 is a time chart schematically illustrating a change in a wind speed, generation power, a generator rotation speed, generator torque, generation power, a blade pitch angle, and a nacelle pitch angle in predetermined wind speed conditions of the wind power generating system according to the first embodiment of the invention.
Fig. 12 is a flowchart illustrating an outline of the process of the operation control unit according to the first embodiment of the invention.
Fig. 13 is a diagram schematically illustrating a relationship between a wind speed, generation power, and a generator rotation speed which are obtained in a case where it is not possible to compute the nacelle wind speed in a process of the controller in the wind power generating system according to the first embodiment of the invention.
Fig. 14 is a diagram illustrating an outline of a configuration of a wind power generating system according to a second embodiment of the invention.
Fig. 15 is a block diagram illustrating an outline of a process of a nacelle-wind-speed computing unit that is installed in a controller according to the second embodiment of the invention.
Fig. 16 is a diagram schematically illustrating a relationship between a blade deformation amount and a nacelle wind speed in the process of the nacelle-wind-speed computing unit that is installed in the controller according to the second embodiment of the invention.
Fig. 17 is a diagram illustrating an outline of a configuration of a wind power generating system according to a third embodiment of the invention.
Fig. 18 is a block diagram illustrating an outline of a process of a nacelle-wind-speed computing unit that is installed in a controller according to the third embodiment of the invention.
Fig. 19 is a diagram schematically illustrating a relationship between a tower deformation amount and a nacelle wind speed in the process of the nacelle-wind-speed computing unit that is installed in the controller according to the third embodiment of the invention.
Fig. 20 is a block diagram illustrating an outline of a process of a nacelle-wind-speed computing unit that is installed in a controller according to a fourth embodiment of the invention.

### DETAILED DESCRIPTION OF THE INVENTION

Hereinafter, embodiments of the invention will be specifically described with reference to the figures. The following description is provided only as Examples, and is not intended to limit the embodiments of the invention to the following Examples.

### Reference Example

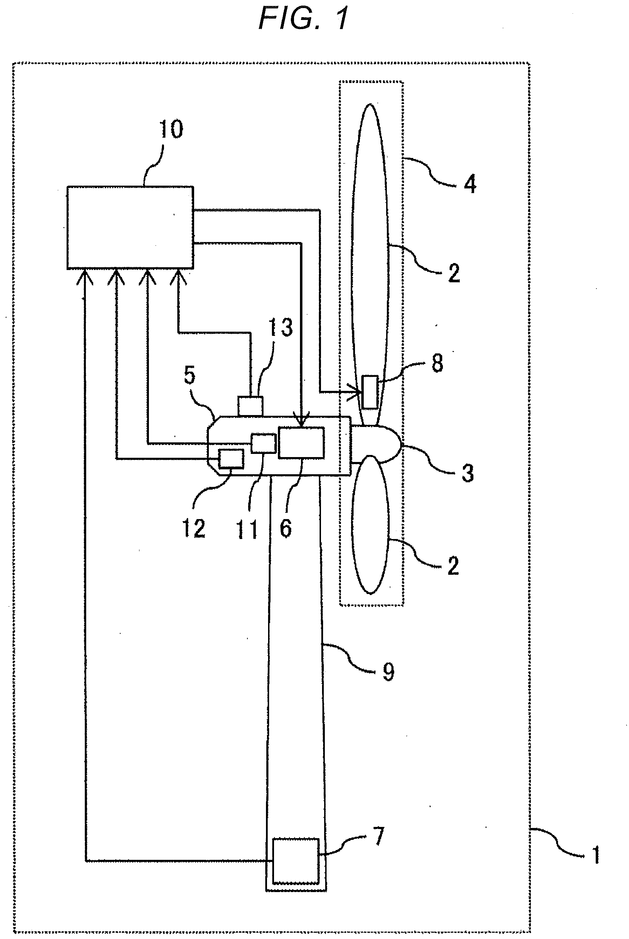

First, a schematic configuration of an entire wind power generating system to which the invention is applicable is described with reference to Fig. 1.

The wind power generating system 1 in Fig. 1 includes a plurality of blades 2 and a rotor 4 configured to include a hub 3 that connects the plurality of blades 2. The rotor 4 is connected to a nacelle 5 via a rotary shaft (not illustrated in Fig. 1) and is capable of changing positions of the blade 2 by rotating. The nacelle 5 rotatably supports the rotor 4. The nacelle 5 is provided with a generator 6 at an appropriate position. The rotor 4 rotates with the blade 2 receiving the wind, a rotation force of the rotor 4 causes the generator 6 to rotate, and thereby it is possible to generate power.

Each of the blade 2 is provided with a pitch actuator 8 that is capable of changing a positional relationship between the blade 2 and the hub 3, that is an angle of the blade referred to as a pitch angle. The pitch angle of the blade 2 is changed by using the pitch actuator 8, and thereby it is possible to change rotation energy of the rotor 4 with respect to the wind. In this manner, while a rotation speed of the rotor 4 is controlled in a large wind speed region, it is possible to control generation power of the wind power generating system 1.

In the wind power generating system 1 in Fig. 1, the nacelle 5 is mounted on a tower 9 and is rotatably supported with respect to the tower 9. A load of the blade 2 is supported by the tower 9 via the hub 3 and the nacelle 5. The tower 9 is disposed on a base portion (not illustrated) and is constructed at a predetermined position such as on the ground, the ocean, or a floating body.

Torque generated by a power conditioning system 7 mounted in the tower 9 (or in the nacelle 5) is controlled, and thereby the generator 6 that is mounted in the nacelle 5 is capable of controlling rotation torque of the rotor 4.

In addition, the wind power generating system 1 includes a controller 10. The controller 10 adjusts the generator 6 and the pitch actuator 8, thereby adjusting power output from the wind power generating system 1, based on detection by a rotation speed sensor 11 that measures a rotation speed of the generator 6 and generation power measured by the power conditioning system 7. In addition, the controller 10 adjusts the pitch actuator 8, thereby reducing vibration of a nacelle pitch angle, based on detection by a sensor 12 that measures acceleration or a nacelle pitch angle of the nacelle. A wind speed sensor 13 that measures a wind speed in the vicinity of the nacelle is mounted on the nacelle 5 and the measured wind speed is input to the controller 10. Here, an example of measuring the wind speed in the vicinity of the nacelle is described. This is because an anemometer is commonly disposed on the nacelle in many cases, and, as a result, the wind speed is detected in the vicinity of the nacelle (that is, in the vicinity of an anemometer mounted position). When a wind speed is applied to the wind power generating system, it is possible to use the wind speed as the nacelle wind speed and the nacelle wind speed is not limited to a wind speed in the vicinity of the nacelle.

Here, the nacelle pitch angle as an output from the sensor 12 may be an angle obtained with a perpendicular direction from a horizontal plane as a reference, or may be an angle obtained with an angle determined in predetermined conditions as a reference. In a case where the wind power generating system 1 is constructed on land, the perpendicular direction may be used as the reference, and an angle obtained in a state of the nacelle without wind may be used as a reference angle. In addition, in a case where the wind power generating system 1 is constructed on a floating base, a perpendicular direction with respect to the horizontal plane may be used as the reference angle, and an angle obtained in a state of the nacelle in conditions of no wind and a low wave height may be used as a reference angle.

Fig. 1 illustrates an aspect in which the controller 10 is mounted at a position outside the nacelle 5 or the tower 9; however, the mounted position is not limited thereto, and an aspect in which the controller may be mounted at a position inside the nacelle 5 or the tower 9, at a predetermined position other than the inside, or at a position outside the wind power generating system 1. In addition, a state in which the power conditioning system 7 is installed at a position inside the tower 9 is illustrated; however, the installed position is not limited thereto, and a state in which the power conditioning system is installed at a predetermined position of the nacelle 5 may be employed.

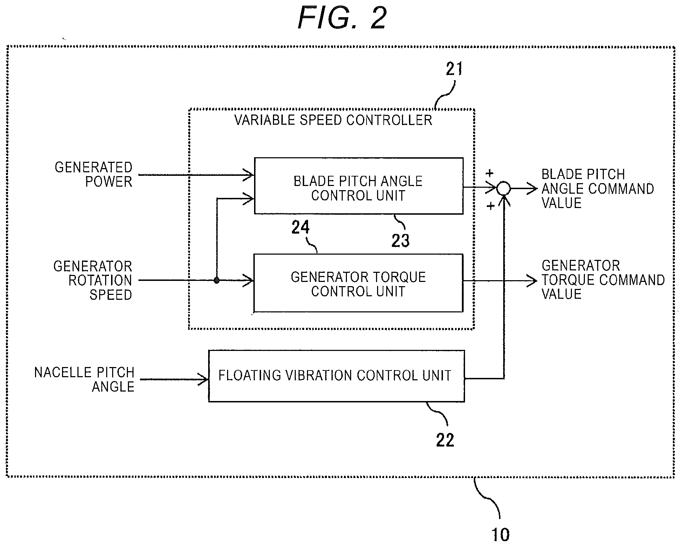

Next, a control unit installed in the controller 10 will be described with reference to Figs. 2 to 5.

Fig. 2 is a block diagram illustrating an outline of an operation control unit that is installed in the controller 10. The operation control unit illustrated in Fig. 2 is configured to include a variable speed controller 21, and a floating-body vibration controller 22. The variable speed controller 21 includes a blade pitch angle control unit 23 that determines a blade pitch angle command value based on the generation power and a generator rotation speed and a generator torque control unit 24 that determines a generator torque command value based on the generator rotation speed. In addition, the floating-body vibration controller 22 determines the blade pitch angle command value, based on the nacelle pitch angle. As another aspect of the floating-body vibration controller 22, an aspect of inputting acceleration of the nacelle is employed. Hereinafter, an example of employing an aspect of inputting the nacelle pitch angle as described above will be described. Further, in the controller 10, the blade pitch angle command values determined by the variable speed controller 21 and the floating-body vibration controller 22 are added, and thereby a final blade pitch angle command value is determined.

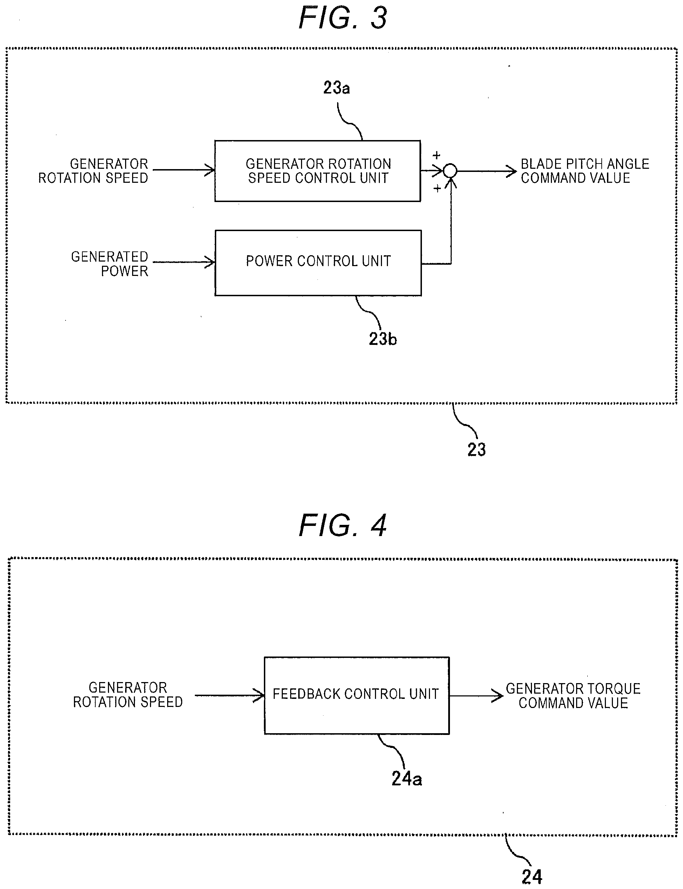

Fig. 3 is a block diagram illustrating an outline of the blade pitch angle control unit 23 of the variable speed controller 21. The blade pitch angle control unit 23 is configured to include a generator rotation speed control unit 23a and a power control unit 23b. The generator rotation speed control unit 23a determines the blade pitch angle command value, based on the generator rotation speed, and the power control unit 23b determines the blade pitch angle command value, based on the generation power. The two values are added, and thereby the final blade pitch angle command value of the blade pitch angle control unit 23 is determined. The generator rotation speed control unit 23a and the power control unit 23b contain content of a process of the feedback control.

Fig. 4 is a block diagram illustrating an outline of the generator torque control unit 24 of the variable speed controller 21. The generator torque control unit 24 determines the generator torque command value through the feedback control, based on the generator rotation speed.

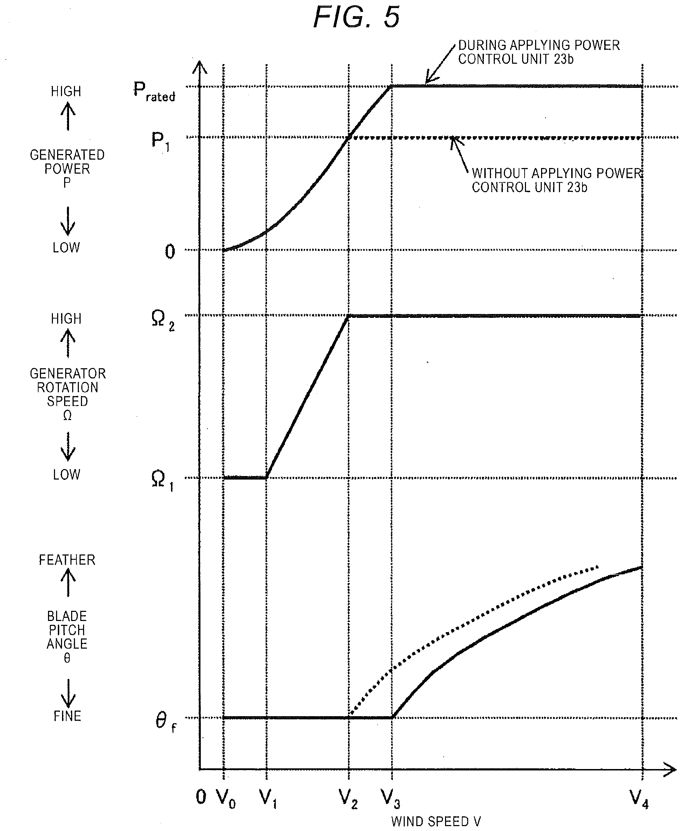

Fig. 5 illustrates characteristics of the wind power generating system 1 which are obtained by the operation control unit installed in the controller 10 illustrated in Figs. 2 to 4. In Fig. 5, the horizontal axis represents the wind speed, and the vertical axis represents the generation power, the generator rotation speed, and the blade pitch angle. In Fig. 5, an upper side indicates that the generation power is high, the generator rotation speed is high, and the blade pitch angle is feather.

With the generator rotation speed control unit 23a of the variable speed controller 21, as illustrated in Fig. 5, the generator rotation speed is maintained at Ω₁ in a condition between the wind speed V₀ to V₁, the generator rotation speed is increased from Ω₁ to Ω₂ a condition between the wind speed V₁ to V₂, and the generator rotation speed is maintained at Ω₂ in a condition of the wind speed V₂ or higher. Here, in a case where the generator rotation speed control unit 23a includes a process structure of the feedback control, the blade pitch angle command value is controlled to be on the feather side such that the generator rotation speed is maintained at Ω₂ in the condition of the wind speed V₂ or higher. Therefore, in a case of a configuration of including only the generator rotation speed control unit 23a, the blade pitch angle is controlled to be on the feather side at the wind speed V₂ or higher as represented by a dotted line in Fig. 5. In this manner, wind power energy received by the rotor decreases, and thus the generation power is limited to P₁. In a case where the power control unit 23b is provided so as to reduce such a generation power limit, thus the generator rotation speed is maintained at Ω₂, and the generation power is lower than rated Prated, the blade pitch angle command value is output such that the wind power energy received by the rotor does not decrease and the blade pitch angle is maintained on the fine side. In this manner, as represented by a solid line of the blade pitch angle in Fig. 5, the blade pitch angle is maintained at θ_{f} on a fine side in a condition of the wind speed of V₂ to V₃.

With the power control unit 23b provided as described above, as state in which the blade pitch angle is controlled to be significantly increased to the feather side in a condition of the wind speed V₃ or higher. In this manner, such a negative damping phenomenon occurs at the wind speed V₃ or higher. Regardless of the wind speed condition, the floating-body vibration controller 22 functions based on the nacelle pitch angle; however, the floating-body vibration controller particularly can exhibit effects in the condition of the wind speed V₃ or higher and it is possible to reduce vibration at the nacelle pitch angle.

As described above, the floating-body vibration controller 22 is effective to reduce the negative damping phenomenon; however, a problem arises in that it is not possible to reduce vibration at the nacelle pitch angle which occurs in the condition of the wind speed of V₂ to V₃.

This is because interference between controls. Three control units that compute the blade pitch angle command value are the generator rotation speed control unit 23a, the power control unit 23b, and the floating-body vibration controller 22, and three command values thereof are added in the condition of the wind speed of V₂ to V₃. At this time, it is not possible to determine the blade pitch angle that simultaneously satisfies requirements from three units in some cases. In particular, since the three control units function based on the feedback control, replies to the blade pitch angles are delayed with respect to replies to the generator rotation speed and the nacelle pitch angle. Because of this, it takes time to determine an optimal value, vibration at the nacelle pitch angle occurs with an occurrence in of a change in the blade pitch angle.

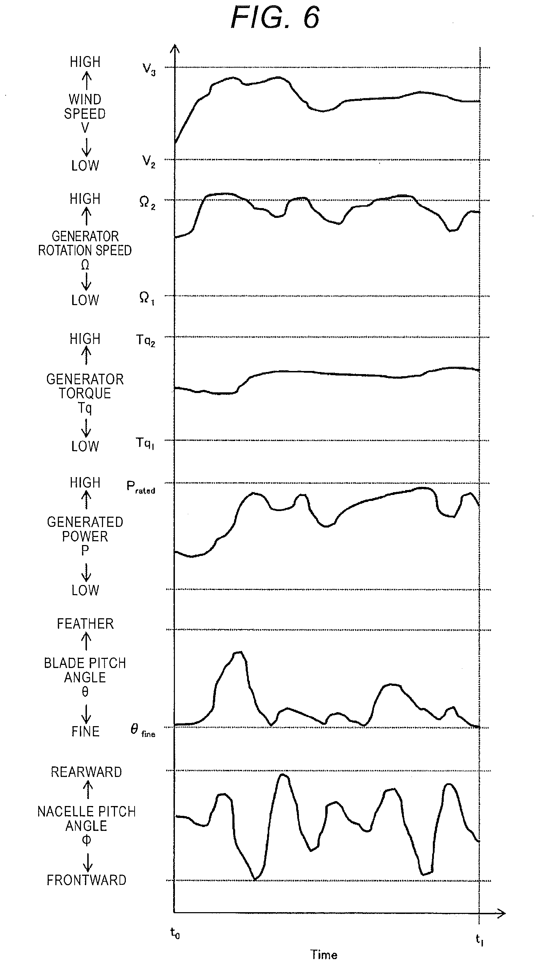

In addition, the characteristic of the blade pitch angle with respect to the wind speed is described to be maintained at θ_{f} at the wind speed V₂ or lower as illustrated in Fig. 5; however, the effect of the generator rotation speed control unit 23a is significant in a case where there is a rapid increase in the wind speed, thereby, the blade pitch angle changes, and the change results in periodic vibration at the blade pitch angle. Such a State is described with reference to Fig. 6.

Fig. 6 is a time chart illustrating variations in the nacelle pitch angle. In Fig. 6, the horizontal axis represents time, and the vertical axis represents the wind speed, the generator rotation speed, the generator torque, the generation power, the blade pitch angle, and the nacelle pitch angle, from above. In Fig. 6, an upper side indicates that the wind speed is high, the generator rotation speed is high, the generator torque is high, the blade pitch angle is feather, and the nacelle pitch angle is rearward. The generator rotation speed changes depending on a rapid increase in the wind speed which occurs early in the time chart, and the blade pitch angle significantly changes depending on the change. A thrust force received by the rotor changes due to the variations in the blade pitch angle, thereby the nacelle pitch angle starts to change, and thus natural vibration is caused. In order to reduce the vibration, the generator rotation speed control unit 23a and the floating-body vibration controller 22 issue commands about the blade pitch angle and the blade pitch angle command value is output from the power control unit 23b. However, in such a method, the three blade pitch angles are added, and thereby command components thereof are canceled or are amplified. Therefore, convergence of the generator rotation speeds or convergence of the natural vibrations of the nacelle pitch angles is degraded.

### First Embodiment

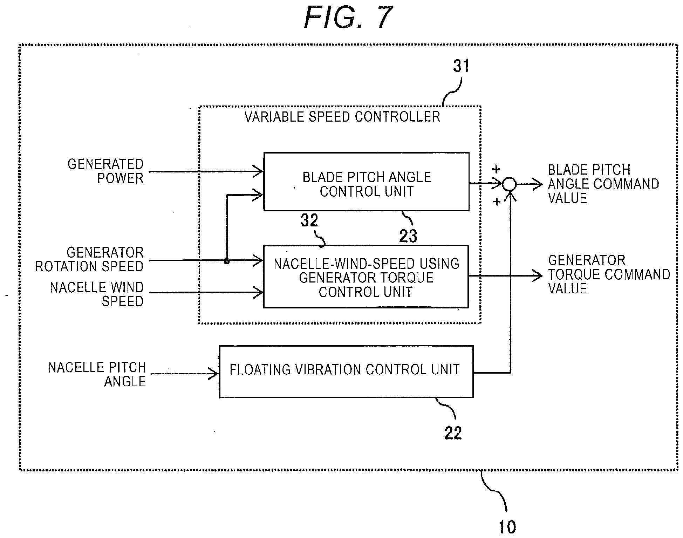

Hereinafter, a first embodiment of the invention will be described with reference to the Figs. 7 to 11. Note that the schematic configuration of the wind power generating system 1 as a prerequisite of application of the invention is the same as that in Fig. 1, and thus the description thereof is omitted.

Fig. 7 is a block diagram illustrating an outline of a process of an operation control unit according to the first embodiment of the invention that is installed in the controller 10. The operation control unit includes a variable speed controller 31 and the floating-body vibration controller 22.

The variable speed controller 31 includes the blade pitch angle control unit 23 and a nacelle-wind-speed using generator torque control unit 32, and determines the blade pitch angle command value and the generator torque command value based on the generation power, the generator rotation speed, and the nacelle wind speed. Such a configuration differs from the configuration illustrated in Fig. 2 in that the generator torque control unit performs a changed process of determining the generator torque command value using the nacelle wind speed. Since the blade pitch angle control unit 23 has the same configuration as that illustrated in Fig. 3, the description thereof is omitted. In addition, since the floating-body vibration controller 22 that configures the operation control unit according to the first embodiment of the invention is also the same as that illustrated in Fig. 2, the description thereof is omitted.

The nacelle-wind-speed using generator torque control unit 32 computes the generator torque command value, based on a nacelle wind speed that is directly or indirectly measured.

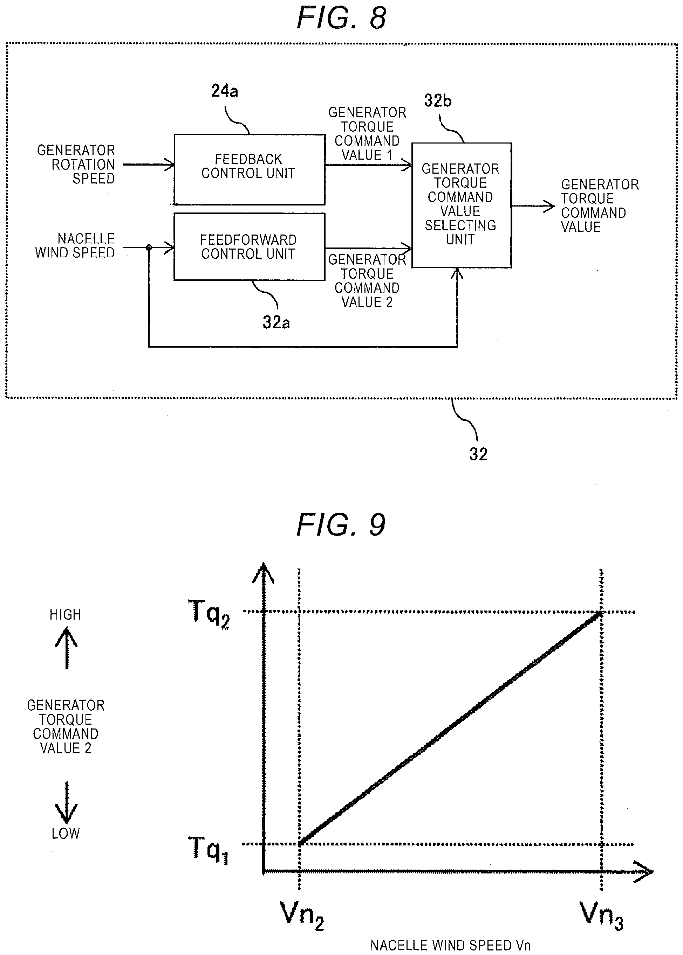

Fig. 8 is a block diagram illustrating an outline of the process of the nacelle-wind-speed using generator torque control unit 32 . The nacelle-wind-speed using generator torque control unit 32 includes a feedback control unit 24a, a feedforward control unit 32a, and a generator torque command value selecting unit 32b.

The feedback control unit 24a is a unit that determines a generator torque command value 1, based on the generator rotation speed, and has the same configuration as that illustrated in Fig. 4, and thus the description thereof is omitted.

The feedforward control unit 32a determines a generator torque command value 2, based on the nacelle wind speed that is directly or indirectly measured. An outline of a process in the control unit is described with reference to Fig. 9.

Fig. 9 is a diagram illustrating characteristics for determining a generator torque command value 2 from the nacelle wind speed in the feedforward control unit 32a. As illustrated in Fig. 9, the generator torque command value 2 is determined in a linear function by using the nacelle wind speed. In addition, the aspect of the process of the feedforward control unit 32a is not limited thereto. An aspect in which the generator torque command value 2 increases depending on an increase in the nacelle wind speed and the generator torque command value 2 decreases depending on a decrease in the nacelle wind speed is employed, a quadratic functionmaybe used, or an aspect of another function or an aspect of using a table or the like may be employed. The feedforward control is performed, based on the detected nacelle wind speed, and the change in input energy received from the wind is adjusted.

The generator torque control unit 32b illustrated in Fig. 8 selects the generator torque command value 1 that is determined by the feedback control unit 24a based on the nacelle wind speed, and the generator torque command value 2 that is determined by the feedforward control unit 32a, and stores the generator torque command value as an output of the nacelle-wind-speed using generator torque control unit 32. More specifically, the generator torque command value 1 is stored as the generator torque command value in a range from a wind speed lower than a nacelle wind speed Vn₂ corresponding to the wind speed V₂ to a nacelle wind speed Vn3 or higher corresponding to the wind speed V₃, and the generator torque command value 2 is stored as the generator torque command value in a range from Vn₂ or higher to a nacelle wind speed lower than Vn3.

In the first embodiment of the invention, the nacelle wind speed in Fig. 7 is determined, based on an output of the wind speed sensor 13 installed on the nacelle 5 illustrated in Fig. 1. The output of the wind speed sensor 13 may be used as is, or may be used as a value obtained by performing a filter process such as a low pass filter process, and the nacelle wind speed is not limited thereto.

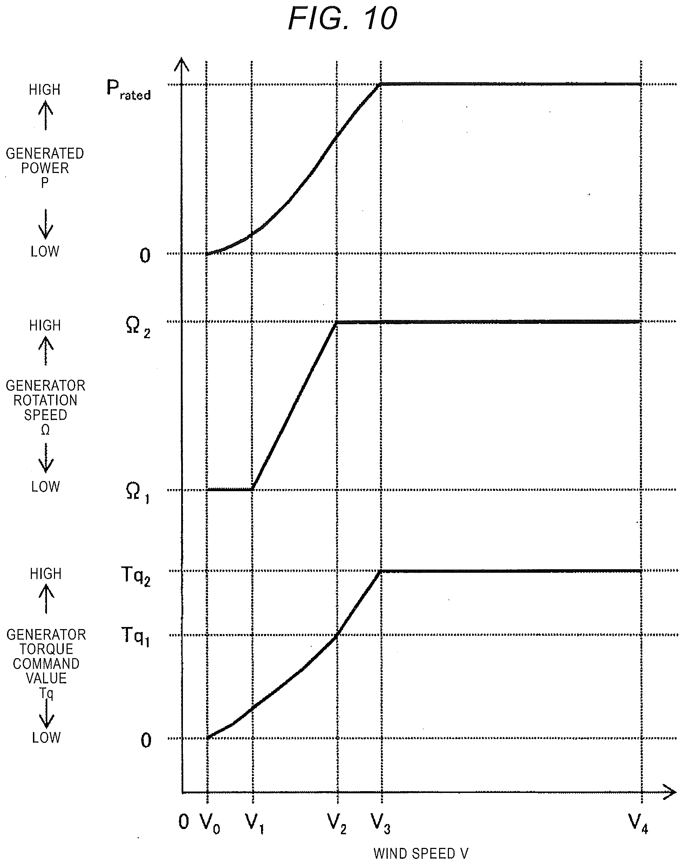

Fig. 10 is a diagram illustrating a relationship between the wind speed and the generation power, the generator rotation speed, and the generator torque command value in the wind power generating system 1 which are obtained in a case where the operation control unit according to the first embodiment of the invention is applied. In Fig. 10, the horizontal axis represents the wind speed, and the vertical axis represents the generation power, the generator rotation speed, and the generator torque command value. In Fig. 10, an upper side along the vertical axis indicates that the generation power is high, the generator rotation speed is high, and the generator torque command value is high. The characteristics of the nacelle wind speed and the generator torque illustrated in Fig. 9 are realized, and thereby the characteristics of the generator torque command value illustrated on a lower side in Fig. 10 are provided to continuously change from Tq1 to Tq2 in a range of the wind speed of V₂ to V₃. In other words, the generator torque command value increases depending on an increase in the nacelle wind speed, and the generator torque command value decreases depending on a decrease in the nacelle wind speed. Similarly, in a range of a wind speed lower than the wind speed V₂ to the wind speed V₃ or higher, a value output from the feedback control unit 24a is employed, similar to a case where the first embodiment of the invention is not applied. In this manner, as illustrated in an upper graph and an intermediate graph in Fig. 10, the characteristics of changing the generation power and the generator rotation speed (constant from V₂) to the wind speed V₃ are realized.

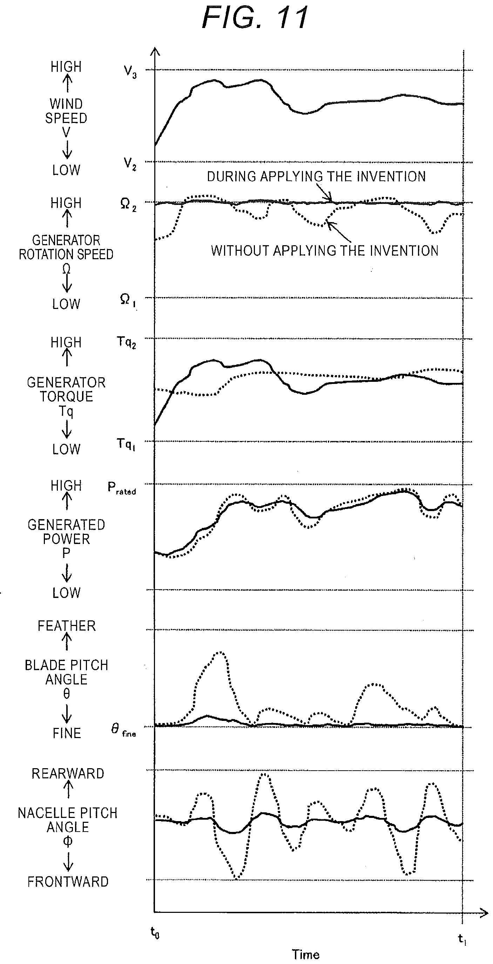

A reply of the wind power generating system 1 to which the first embodiment of the invention is applied is described with reference to Fig. 11. Fig. 11 is a time chart schematically illustrating a change in the wind speed, generation power, the generator rotation speed, generator torque, the generation power, the blade pitch angle, and the nacelle pitch angle in predetermined wind speed conditions of the wind power generating system 1 according to the first embodiment of the invention. In Fig. 11, the horizontal axis represents time, and the vertical axis represents the wind speed, the generator rotation speed, the generator torque, the generation power, the blade pitch angle, and the nacelle pitch angle, from above. In Fig. 11, an upper side indicates that the wind speed is high, the generator rotation speed is high, the generator torque is high, the generation power is high, the blade pitch angle is feather, and the nacelle pitch angle is rearward. In Fig. 11, a dotted line represents an outline of a time chart obtained in a case where the first embodiment of the invention illustrated in Fig. 6 is not applied, and a solid line represents an outline of a time chart obtained in a case where the first embodiment of the invention is applied.

The blade pitch angle, the generator torque, and a yaw angle in the wind power generating system 1 are adjusted, and thereby it is possible to adj ust the thrust force that is received by the blade. However, during the adjustment, it takes a significant time to control the yaw angle, and thus the yaw angle is not effectively used for reducing the vibration at the nacelle pitch angle as the target of the application. In addition, there is a unit disclosed in Japanese Patent No. 4599350 as a unit that uses the blade pitch angle. By comparison, the first embodiment of the invention aims to reduce the vibration at the nacelle pitch angle by controlling the generator torque. The application of the first embodiment of the invention causes the nacelle wind speed (not illustrated) to change depending on the wind speed, and causes the generator torque to change, based on the change in the nacelle wind speed. In this manner, since the change in the wind power energy input to the rotor in the wind speed conditions is absorbed to the generator torque, the generator rotation speed is controlled to be substantially constant. This contributes to reduction in the variations in the blade pitch angle depending on the interference during control, by change into the two control units that output a command value as the blade pitch angle. The reduction in the variations in the generator rotation speed causes a rapid change in the thrust force that is applied to the rotor to be reduced, and thereby it is possible to reduce the vibration at the nacelle pitch angle. Regardless of the application of the first embodiment of the invention, the generation power does not significantly change; however, it is possible to reduce variation component depending on the vibration at the nacelle pitch angle.

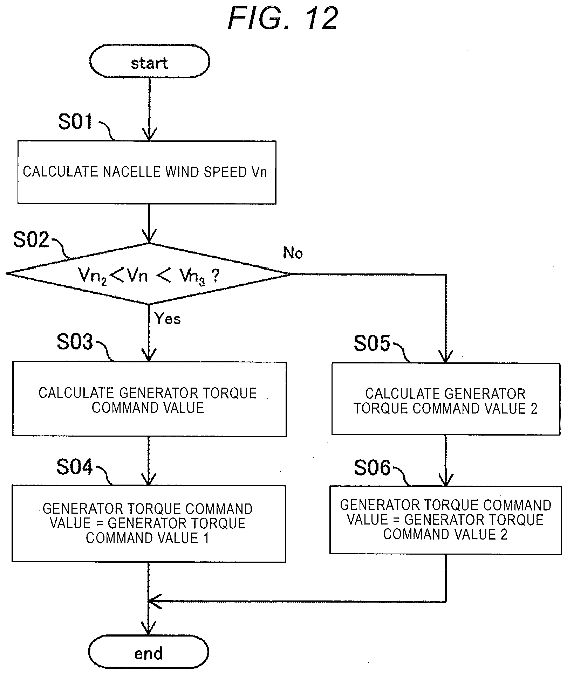

Fig. 12 is a flowchart illustrating an outline of the process of the nacelle-wind-speed using generator torque control unit 32 in the operation control unit according to the invention.

In Step S01, a nacelle wind speed Vn is calculated, and the process proceeds to Step S02. In Step S02, whether the nacelle wind speed Vn is in a range of the nacelle wind speed Vn₂ or higher to a wind speed lower than Vn3 is determined. The process proceeds to Step S03 in a case where the determination is Yes, and the process proceeds to Step S05 in a case where the determination is No. In Step S03, the generator torque command value 1 is determined, based on the nacelle wind speed, and then the process proceeds to Step S04. In Step S04, a series of control operations of storing the generator torque command value 1 as the generator torque command value is ended. In Step S05, the generator torque command value 2 is computed, and then the process proceeds to Step S06. In Step S06, a series of control operations of storing the generator torque command value 2 as the generator torque command value is ended.

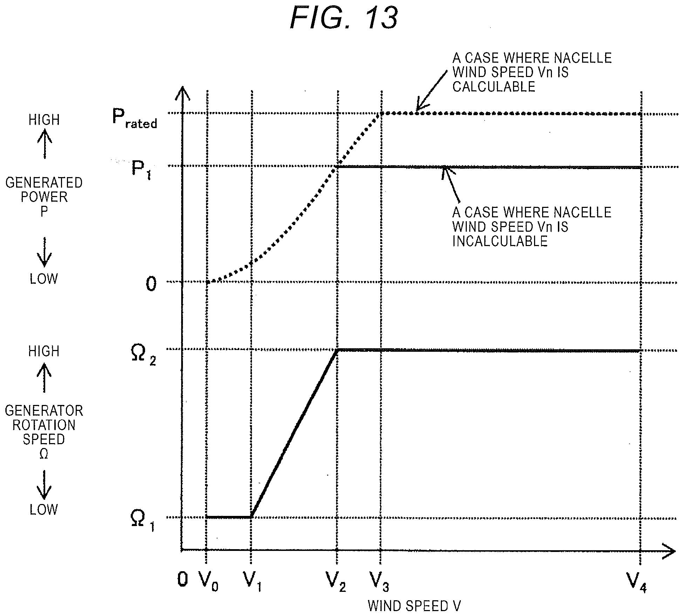

In the first embodiment of the invention described above, a case where it is possible to compute the nacelle wind speed Vn in the process of the controller 10 is described; however, the process is not limited thereto. For example, in a case where the wind speed sensor 13 malfunctions, and thus it is not possible to compute the nacelle wind speed Vn in the process of the controller 10, it is not possible to adjust the generator torque depending on the nacelle wind speed described above. A unit corresponding to this case is described with reference to Fig. 13.

Fig. 13 illustrates a relationship between the wind speed and the generation power in a case where it is not possible to compute the nacelle wind speed Vn in the process of the controller 10. Even without the input information of the nacelle wind speed Vn, a power generating operation continues without stop of the operation. In Fig. 13, the horizontal axis represents the wind speed, and the vertical axis represents the generation power and the generator rotation speed from above, and an upper side in Fig. 13 indicates that the generation power is high, and the generator rotation speed is high. In addition, in Fig. 13, a dotted line represents a case where it is possible to compute the nacelle wind speed Vn, and a solid line represents a case where it is not possible to compute the nacelle wind speed Vn.

In a case where it is not possible to compute the nacelle wind speed Vn in the process of the controller 10, an aspect in which the generator torque command value is limited to a value of the generator torque which can be generated at a wind speed at which a rotation speed of the generator reaches a rated speed while the pitch angle is maintained on the fine side. Specifically, the generation power P is limited to generation power P₁ obtained when a wind speed equal to or higher than the wind speed V₂, that is, the generator rotation speed, reaches a rated value Ω₂. In this manner, it is possible to reduce the vibration produced when the nacelle wind speed Vn is in a range of the nacelle wind speed Vn₂ or higher to a wind speed lower than Vn3.

### Second Embodiment

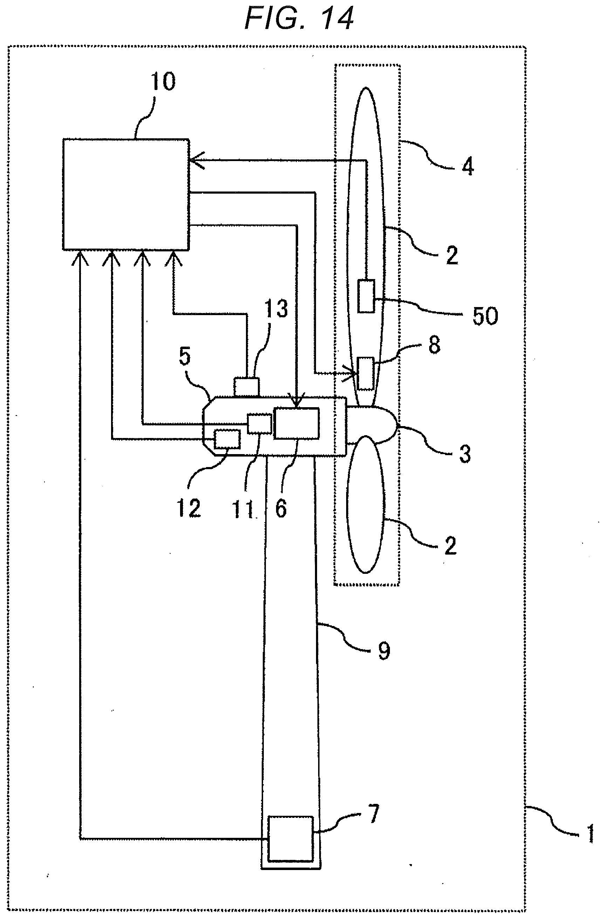

Next, a second embodiment of the invention will be described with reference to Figs. 14 to 16.

Fig. 14 is a diagram illustrating an outline of a configuration of the wind power generating system 1 according to the second embodiment of the invention. Unlike that in Fig. 1, blade deformation amount sensors 50 are provided on the blades, respectively, and thereby a signal detected by a sensor is input to the controller 10. The blade deformation amount sensor 50 is a sensor that is capable of measuring a deformation amount of the blade that is generated by the thrust force received from the wind.

The operation control unit according to the second embodiment of the invention is the same as that in the first embodiment, and thus the description thereof is omitted.

A difference from the first embodiment is a determination method of the nacelle wind speed.

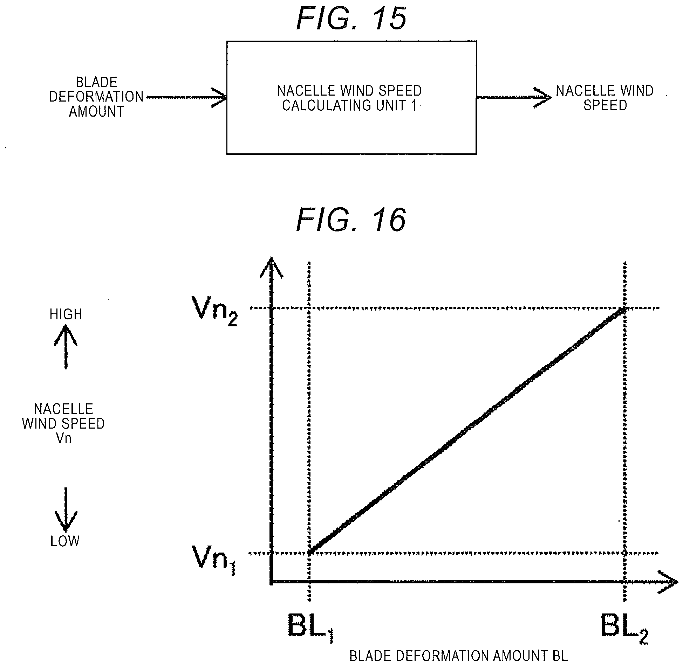

Fig. 15 is a block diagram illustrating an outline of the determination method of the nacelle wind speed. The operation control unit according to the second embodiment of the invention includes a nacelle-wind-speed computing portion 1 and determines the nacelle wind speed, based on a blade deformation amount as an output of the blade deformation amount sensor 50. Since the blade deformation amount is determined by using the thrust force received from the wind, it is possible to use the blade deformation amount like a value measured by the anemometer.

Fig. 16 represents a computation method of the nacelle wind speed Vn from a blade deformation amount BL. In Fig. 16, the horizontal axis represents the blade deformation amount BL and the vertical axis represents the nacelle wind speed Vn. As illustrated in Fig. 16, an aspect in which the blade deformation amount BL is proportional to the nacelle wind speed Vn is employed; however, the aspect is not limited thereto, and an aspect in which the nacelle wind speed Vn increases depending on a polynomial expression or an exponent function, based on the blade deformation amount BL may be employed.

The time chart and the flowchart obtained in the case of application of the second embodiment of the invention is the same as that in the first embodiment, and thus the description thereof is omitted.

### Third Embodiment

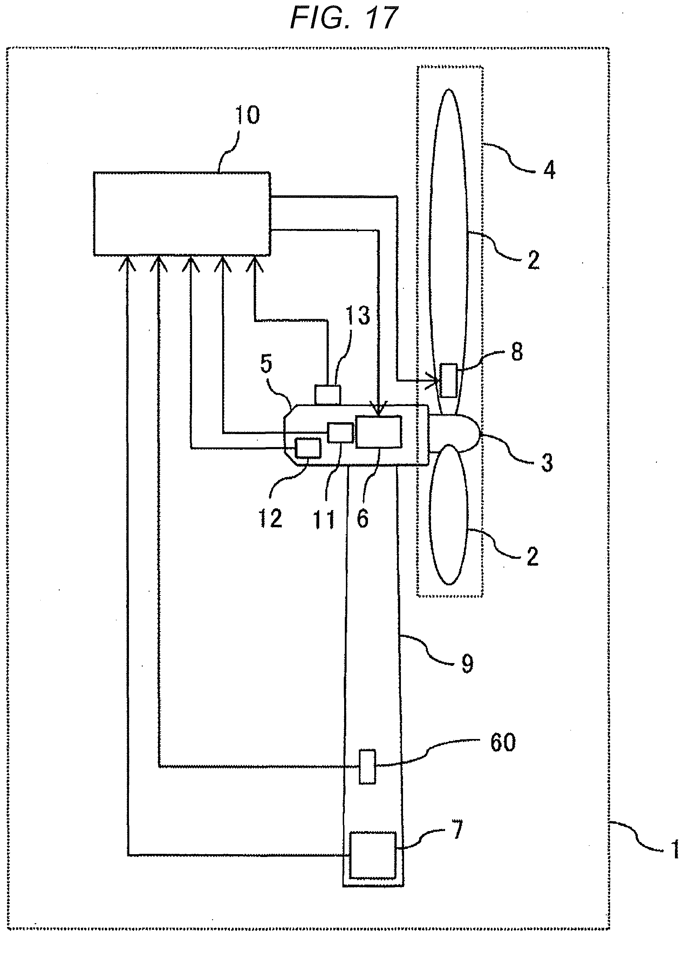

Next, a third embodiment of the invention will be described with reference to Figs. 17 to 19.

Fig. 17 is a diagram illustrating an outline of a configuration of the wind power generating system 1 according to the third embodiment of the invention. Unlike those in Figs. 1 and 14, a tower deformation amount sensor 60 is provided on the tower, and thereby a detected signal is input to the controller 10. The tower deformation amount sensor 60 is a sensor that is capable of measuring a deformation amount of the tower that is generated by the thrust force received from the wind.

The operation control unit according to the third embodiment of the invention is the same as those in the embodiments, and thus the description thereof is omitted.

A difference from the embodiments is a determination method of the nacelle wind speed.

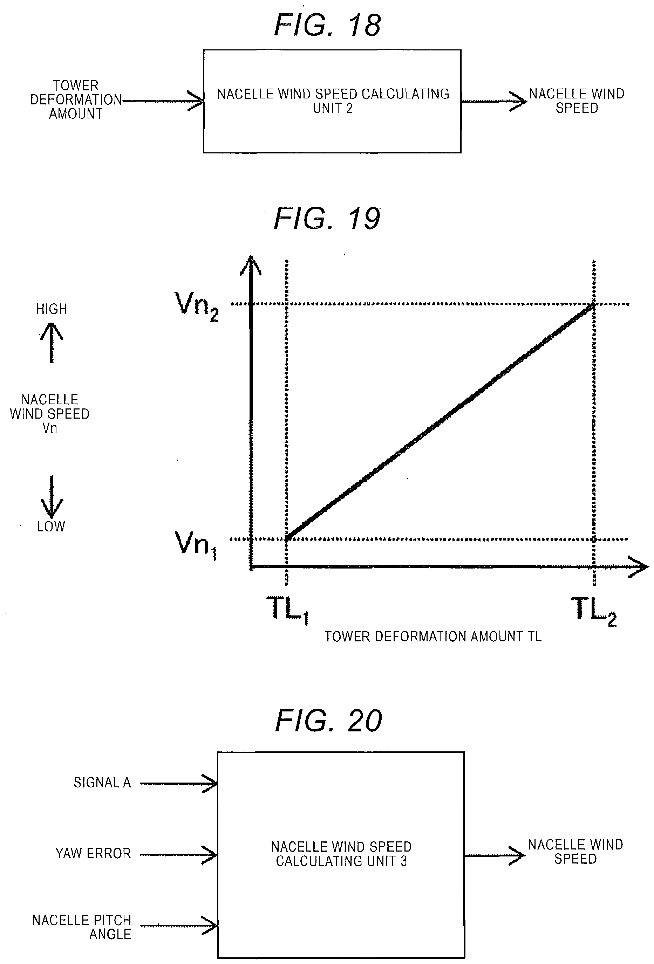

Fig. 18 is a block diagram illustrating an outline of the determination method of the nacelle wind speed. The operation control unit according to the third embodiment of the invention includes a nacelle-wind-speed computing portion 2 and determines the nacelle wind speed, based on a tower deformation amount as an output of the tower deformation amount sensor 60. Similar to the blade deformation amount according to the second embodiment, since the tower blade deformation amount is also determined by using the thrust force received from the wind, it is possible to use the tower deformation amount like a value measured by the anemometer.

Fig. 19 represents a computation method of the nacelle wind speed Vn from a tower deformation amount TL. In Fig. 19, the horizontal axis represents the tower deformation amount TL and the vertical axis represents the nacelle wind speed Vn. As illustrated in Fig. 19, an aspect in which the tower deformation amount TL is proportional to the nacelle wind speed Vn is employed; however, the aspect is not limited thereto, and an aspect in which the nacelle wind speed Vn increases depending on a polynomial expression or an exponent function, based on the tower deformation amount TL may be employed.

The time chart and the flowchart obtained in the case of application of the third embodiment of the invention is the same as those in the first and second embodiments, and thus the description thereof is omitted.

### Fourth Embodiment

Next, a fourth embodiment of the invention will be described with reference to Fig. 20.

Since it is possible to apply the fourth embodiment of the invention to any one of the wind power generating systems 1 of the embodiments, the description of the outline of the configuration is omitted.

The operation control unit according to the fourth embodiment of the invention is the same as those in the embodiments, and thus the description thereof is omitted. A difference from the embodiments is a determination method of the nacelle wind speed.

Fig. 20 is a block diagram illustrating an outline of the determination method of the nacelle wind speed. The operation control unit according to the fourth embodiment of the invention includes a nacelle-wind-speed computing portion 3 and determines the nacelle wind speed, based on a signal A, a yaw error, and a nacelle pitch angle. The signal A means an output of the nacelle wind speed sensor 13 described above, an output of the blade deformation amount sensor 50, or an output of the tower deformation amount sensor 60. The signal is not limited thereto, and may be one or a plurality of outputs. The signal A is acquired by using the yaw error or the nacelle pitch angle, and thereby an angle of the rotor surface is adjusted with respect to the wind. In this manner, it is possible to determine the nacelle wind speed with higher accuracy. In other words, the detection result of the nacelle wind speed depends on a value measured by the anemometer or the thrust force received by the blade, the tower, or the like; however, inclination of the rotor surface results in detecting a direction component shifted from an actual wind speed. Accordingly, in order to correct such a shift, both of the yaw error (in consideration of a shift within a horizontal plane) and a nacelle pitch angle (in consideration of a shift from a perpendicular direction) are used.

The time chart and the flowchart obtained in the case of application of the fourth embodiment of the invention is the same as those in the first, second, and third embodiments, and thus the description thereof is omitted.

As described above, it is possible to reduce excitation in the natural vibration at the nacelle pitch angle without depending on wind speed conditions by the wind power generating systems and the operation methods thereof of the embodiments. In this manner, it is possible to achieve improvement in reliability of the wind power generating system, a longer service life, and improvement in power generation efficiency.

The present invention is not limited to the embodiments described above, and includes various modification examples. For example, the embodiments described above are described in detail for easy understanding of the invention, and the present is not necessarily limited to including the entire configuration described above. In addition, it is possible to replace a configuration of any embodiment with a part of a configuration of another embodiment, and it is possible to add a configuration of any embodiment to a configuration of another embodiment. In addition, it is possible to add, remove or replace another configuration to, from or with a part of the configuration of each embodiment.

## Claims

1. A wind power generating system comprising:
a rotor (4) that is provided with a blade (2) of which a pitch angle is changeable and that rotates by receiving the wind;
a nacelle (5) that rotatably supports the rotor (4);
a generator (6) that generates power by using rotation energy of the rotor (4); and
a control device that controls a device that is included in the wind power generating system (1),
wherein, in a case where a speed is equal to or higher than a wind speed at which a rotation speed of the generator (6) reaches a rated speed and a speed is equal to or lower than a wind speed to reach rated generation power, the control device performs feedforward control of generator torque that is transmitted as a command to the generator and adjusts a change in input energy, based on a wind speed applied to the wind power generating system (1).

2. The wind power generating system according to claim 1,
wherein the control device increases a command value of the generator torque along with an increase in the wind, and the control device decreases a command value of the generator torque along with a decrease in the wind speed.

3. The wind power generating system according to claim 1 or 2,
wherein the control device determines the wind speed, based on an output signal of a wind speed sensor (13) that measures the wind speed.

4. The wind power generating system according to claim 1 or 2,
wherein the control device determines the wind speed, based on an output signal of a sensor (50) that measures a deformation amount of the blade (2).

5. The wind power generating system according to claim 1 or 2,
wherein the control device determines the wind speed, based on an output signal of a sensor (60) that measures a deformation amount of a tower (9) on which the nacelle (5) is installed.

6. The wind power generating system according to any one of claims 1 to 5,
wherein the control device corrects the wind speed, based on at least one of a yaw error indicating a difference of the nacelle direction with respect to a wind direction of the rotor (4) and an inclination angle of the nacelle (5) from a horizontal plane.

7. The wind power generating system according to any one of claims 1 to 6,
wherein, in a case where the wind speed is not input, the control device limits the command value of the generator torque to a value of the generator torque which can be generated at a wind speed at which a rotation speed of the generator (6) reaches a rated speed while the pitch angle is maintained on a fine side.

8. The wind power generating system according to any one of claims 1 to 7,
wherein the wind power generating system (1) is a downwind type in which a position of the rotor (4) during a power generating operation is disposed on leeward from the nacelle (5).

9. The wind power generating system according to any one of claims 1 to 8,
wherein the power generating system (1) is constructed on a floating body as a foundation that floats on the ocean.

10. An operation method of a wind power generating system that includes
a rotor (4) that is provided with a blade (2) of which a pitch angle is changeable and that rotates by receiving the wind, and
a generator (6) that generates power by using rotation energy of the rotor (4),
the operation method comprising:
performing feedforward control on generator torque that is transmitted as a command to the generator (6) and adjusting a change in input energy, based on a wind speed applied to the wind power generating system (1), in a case where a speed is equal to or higher than a wind speed at which a rotation speed of the generator reaches a rated speed and is equal to or lower than a speed to reach rated generation power.
